# EUROPEAN PATENT SPECIFICATION

(11) **EP 2 988 017 B1**
(45) Date of publication and mention of the grant of the patent: **21.12.2016**
(21) Application number: 14181853.4
(22) Date of filing: 21.08.2014
(51) Int. Cl.: F16F 15/32

(54) **Split self-adhesive balancing weight for a vehicle wheel**
Geteiltes selbsthaftendes Auswuchtgewicht für ein Fahrzeugrad
Poids d'équilibrage auto-adhésif fendu pour une roue de véhicule

(43) Date of publication of application: 24.02.2016
(73) Proprietor: WEGMANN automotive GmbH & Co. KG, 97209 Veitshöchheim (DE)
(72) Inventor: Hornung, Thomas, 97072 Würzburg (DE)
(74) Representative: Jöstingmeier, Martin

(56) References cited:
- EP-A1- 1 355 084
- WO-A1-02/43971
- WO-A1-99/00609
- WO-A1-2007/116166
- CN-U- 203 780 215
- DE-A1- 10 343 042
- DE-A1-102009 015 673

## Description

### Field of the invention

The invention relates to a self-adhesive balancing weight, which may be attached to the rim of a wheel of a vehicle for balancing the wheel.

### Description of the related art

The contact surface of self-adhesive balancing weights generally is formed so as to accurately fit to the counter surface of the wheel rim holding the weight to provide as much contact surface and thereby adhesive surface area as possible in order to ensure safe fixation. As the rim profiles of different types of wheels - coming from different wheel manufactures for instance - differ in a wide range, a great number of different balancing weights has to be kept on stock. Particularly, the counter-surface of aluminum wheel rims, to which the balancing weights have to be fixed, often are concave-convex shaped so that accurate adaptation of balancing weights is difficult.

WO 99/00609 discloses self-adhesive balancing weights the contact surfaces of which are exactly complementary to the shape of the counter-surface of the respective wheel rim so that they could not be used with wheel rims of different shape.

There is a large number of different rim geometries in the market. Furthermore, there are significant mechanical tolerances in the rims which may be in an order of 1 mm.

For reliably attaching balancing weights to a rim, there are two basic concepts. Self-adhesive balancing weights usually have a planar back surface which is designed to adhere to an at least essentially planar surface which is curved only around the rotational axis of the wheel. Accordingly, the self-adhesive balancing weights have to be bent only in one axis. The second type of balancing weights are clip-on balancing weights which are held to the rim by a spring clip. These balancing weights usually are held in an outer groove of the rim and therefore must at least roughly be adapted to the contour of the groove. Due to the large number of different grooves, at least a significant number of differently formed balancing weights is required.

### Summary of the invention

The object of the present invention is to provide self-adhesive balancing weights which fit to several different rim shapes.

The solution of the above-mentioned problem is described in the independent claim 1, whereas further embodiments and improvements are described in the claims dependent on claim 1.

For finding a solution of the problem, a large number of rims has been analyzed and checked for possible locations for mounting of balancing weights. A balancing weight which fits to most rims on the market, provides the following features.

A balancing weight according to the present invention comprises a body having at least two weight sections being pivotably connected with each other by means of a connecting element, which may be like a hinge, and preferably having a pivot axis tangential with respect to the axis of a wheel rim carrying the balancing weight.

In another embodiment, a belt or chain of balancing weights are held on a carrier like a plastic belt and most preferably on a self-adhesive tape. The carrier defines a longitudinal axis which may be at the center of a first plane of a planar tape. The longitudinal axis preferably is a line along the center in the plane of the carrier. The balancing weights comprise a body having at least two weight sections being pivotably connected with each other by means of a connecting element having a pivot axis parallel to said longitudinal axis.

By pivoting the weight sections one with respect to the other, the balancing weight may at least to a certain extent be adapted to different concave or even convex shapes of wheel rims, even when its contacting surface is not accurately adapted to the respective counter-surface, whereby at least a number of contacting lines corresponding to the number of weight sections will be established.

According to a preferred embodiment of the invention, the hinge like connecting element is formed as a hinge integral with the adjacent weight sections assuming that the material of the balancing weight on the one hand and the thickness of the hinge allows for bending.

According to another embodiment of the present invention, the hinge like connecting element consists of a flexible tape to which the weight sections are fixed. In this case the weight sections may be made of a material whatever, for instance a material which is not flexible or ductile. Preferably the flexible tape is an adhesive tape with double-side adhesion layers which, at the same time, serves to fix the balancing weight to the wheel rim.

In a further embodiment, two balancing weight sections are only connected by the self-adhesive tape. Preferably, at least one of the balancing weight sections has a chamfered or rounded edge for sliding or pivoting against the other balancing weight section.

It is further preferred that a spacing gap is formed between the respective weight sections. The form and dimension of the gap determines the possible pivot angle between the weight sections.

In order to achieve a better adaptation of the balancing weight to the wheel rim preferably the contact surface of at least one of the weight sections is at least approximately complementary to respective counter-surfaces of the wheel rim. In this way a larger contact area and therewith effective adhesive area may be achieved.

### Description of Drawings

In the following, the invention will be described by way of example, without limitation of the generally inventive concept, by examples of embodiments with reference to the drawings.

In the drawings,
Figure 1 is a radial partial sectional view of a steel wheel rim with a self-adhesive balancing weight arranged in a rim horn;
Figure 2 is a radial partial sectional view of an aluminum wheel rim with a self-adhesive balancing weight mounted at the rim horn;
Figure 3 is a perspective partial view of an aluminum wheel rim similar to figure 2 with a self-adhesive balancing weight and a conventional clip-on-balancing weight, both mounted on the rim horn.
Figure 4 is a radial partial sectional view of a steel wheel rim with a self-adhesive balancing weight arranged in a rim horn with a smaller radius;
Figure 5 is a radial partial sectional view of a steel wheel rim with a self-adhesive balancing weight arranged in a rim horn with a larger radius;
Figure 6 is a radial partial sectional view of a steel wheel rim with a chain of self-adhesive balancing weights arranged in a rim horn;
Figure 7 is a balancing weight with extensions for simplified handling.
Figure 8 shows a balancing weight with a smaller section and a larger section, which can be adapted to a rim with a comparatively small curve radius.
Figure 9 shows an adhesive tape for a plurality of balancing weights.
Figure 10 shows a more flexible adhesive tape.
Figure 11 shows a further embodiment.
Figure 12 shows another embodiment in detail.
Figure 13 shows another embodiment in detail.

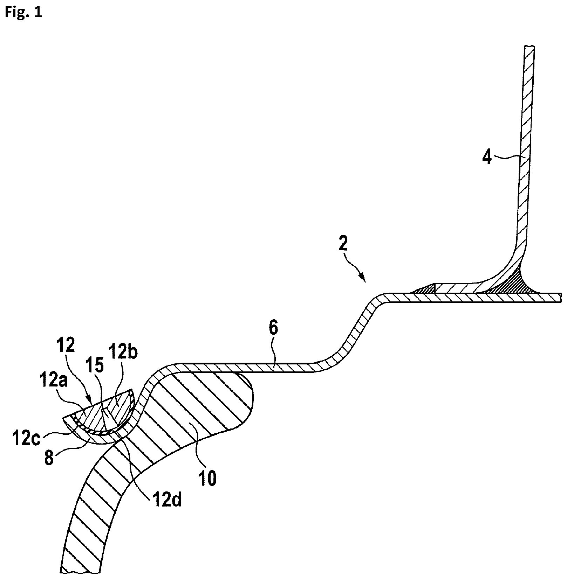

The wheel rim 2 shown in figure 1 consists of a wheel disk 4 and a wheel band 6 ending in a wheel horn 8 as generally known in the art. A tire 10 is mounted to the wheel rim 2.

A self-adhesive balancing weight 12 is arranged in the rim horn 8, the balancing weight consisting of two weight sections 12a and 12b. The weight sections 12a, 12b are pivotably connected with each other by means of a hinge-like connecting element having a pivot axis tangential with respect to the axis of a wheel rim (not shown) carrying the balancing weight. The connecting element allows the weight sections to swivel one with respect to the other to a certain extent. In this manner the balancing weight may be adapted to differently formed rim horns so as to assure a contact area as large as possible. The contact surfaces of the weight sections 12a, 12b contacting the rim horn 8 are fixed to the inner surface of the rim horn 8 by means of a double-side adhesive tape (12c, 12d). A gap 15 is formed between the weight sections 12a, 12b, the dimension and form of which determines the possible swivel angle between the weight sections.

In the embodiment shown in figure 1 the hinge-like connecting element is formed as an integral hinge, i.e. integral with the respective adjacent weight sections 12a, 12b. That means that the balancing weight 12 must consist of a material having a certain flexibility.

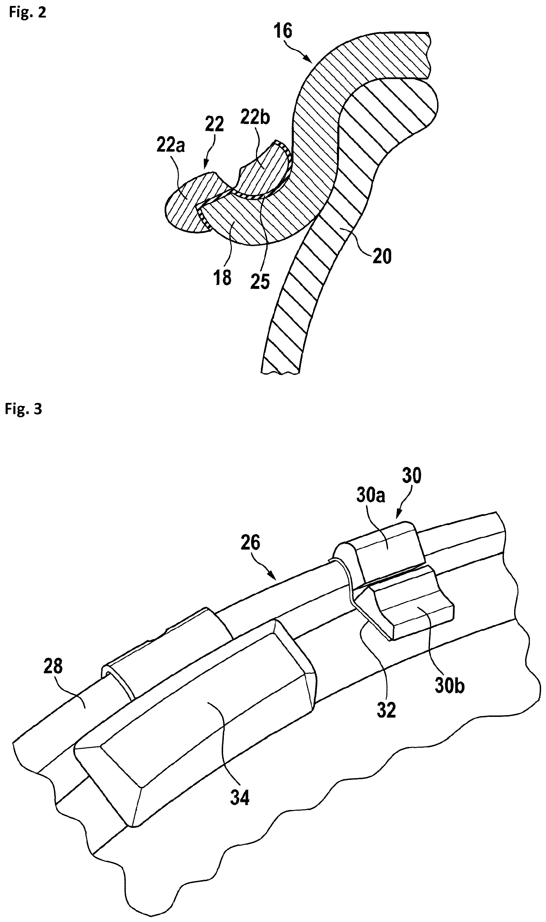

Figure 2 shows an aluminum wheel rim 16 also ending in a rim horn 18. A tire 20 is mounted on the wheel rim 16.

A two-piece-balancing weight 22 of the self-adhesive type is arranged at the rim horn 18, the balancing weight consisting of two weight sections 22a and 22b. The weight sections 22a, 22b are connected by means of a hinge-like connecting element with each other so that they are pivotably about a hinge axis tangential to the rim axis. Weight section 22a is formed to grip over the end of the rim horn 18 while weight section 22b is pivoted so that it fits to the inner contour of rim horn 18.

The connecting element in this embodiment consists of the double-adhesive tape 25, at the same time fixing the balancing weight to the wheel rim.

Figure 3 is a perspective partial view of an aluminum wheel rim 26 similar to figure 2 with a rim horn 28 to which, on the one hand, a self-adhesive balancing weight 30 according to the present invention is mounted, and, on the other hand and in comparison therewith, a conventional clip-on-balancing weight 32.

The balancing weight 30 as in figure 2 consists of two weight sections 30a and 30b, which are pivotably connected one to the other by means of a hinge-like connecting element 32 made of a double-adhesive tape 31. The weight section 30a grips over the end of rim horn 28 while weight section 30b fits to the inner contour of rim horn 28 owing to the flexible connecting element 32.

The balancing weight 30 according to the present invention allows to mount most of the mass of the balancing weight radially far outward so that its effective mass may be less than the mass of a conventional clip-on balancing weight 34 with its effective mass further inward.

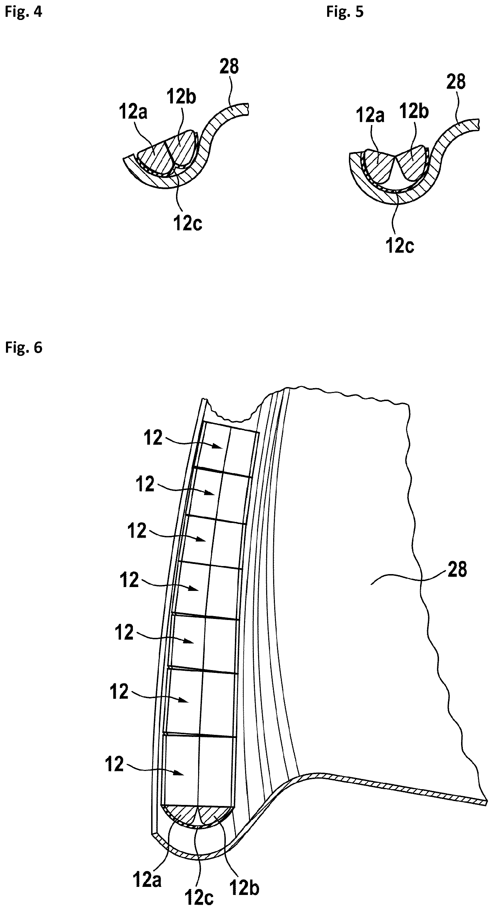

Figures 4 and 5 show in comparison, how the same balancing weight having two pivotably connected weight sections 12a, 12b is attached to rims having different shaped rim horns. In figure 4, the rim horn has a comparatively small radius. Accordingly, the weight sections are close to each other, forming a smaller outer radius. In figure 5, the rim horn has a larger radius. Therefore, the weight sections are distant to each other, forming a larger gap between the weight sections and resulting in a larger outer radius. Adapting the gap between the weight section allows to adapt the outer contour to different rim horn geometries.

Figure 6 is a radial partial sectional view of a steel wheel rim with a chain of self-adhesive balancing weights arranged in a rim horn. A plurality of segmented and pivotably connected balancing weights are arranged to a chain of balancing weights resulting in a larger mass. Preferably, the balancing weights have a common adhesive tape.

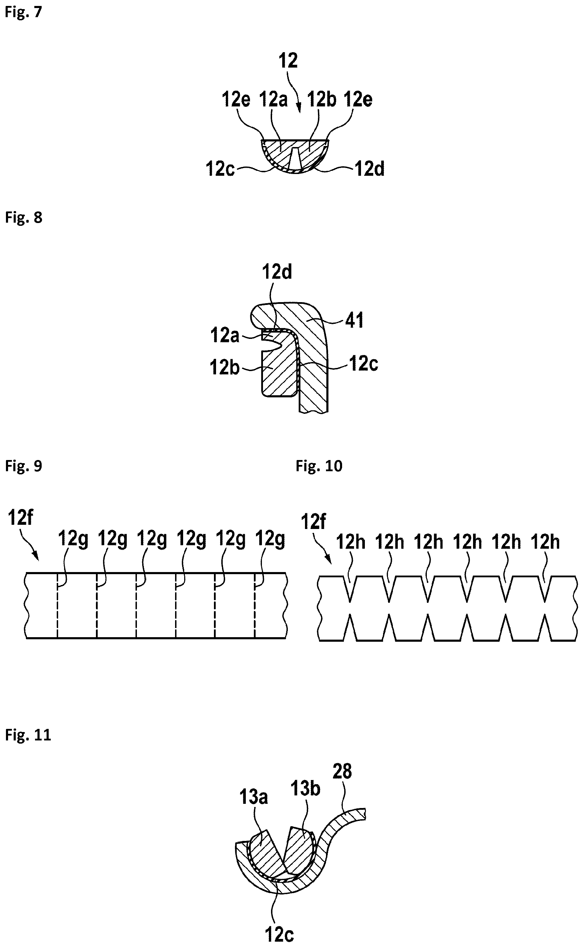

In figure 7 a balancing weight with extensions for simplified handling is shown. These extensions 12e are at the sides of the weight sections 12a, 12b, close to the top surface of these weight sections. There is no adhesive tape 12c, 12d on these extensions. It is preferred, it the extensions have the same or less thickness than the adhesive tape. It is difficult to handle a balancing weight without these extensions, as a person who would pick up a balancing weight would need to hold it between two fingers at opposite sides of the balancing weight. Therefore, there is a high probability, that the balancing weight would stick to the persons fingers by its adhesive tape. The same problem would arise by handling by a robot. With the extensions 12e, two non-- sticking surfaces are provided at opposite sides of the balancing weights, which simply can be gasped by a person or by a robot.

In figure 8 another embodiment of the balancing weight is shown which can be inserted into an edge of a rim with a comparatively small radius. Here, the rim 41 of a wheel forms approximately a right angle. The two balancing the weight sections are different in shape and size. A smaller section 12a is close to the edge of the rim, while the other section is distant thereof. Due to the gap between the sections, the balancing weight may be bent and adapted to the angle of the rim.

In figure 9, a flexible adhesive tape 12f for balancing weights as described above is shown. Individual section 4 individual balancing weights are formed by a perforation in the tape. This perforation may comprise a serious of holes or slots. It allows for easier separation of balancing weights and it allows for easier bending. As it can be seen from figure 6, the balancing weights are adapted by the flexible sections to the small rim radius of the wheel. Furthermore, they have to be bent in a second axis to adapt to the outer time later of the wheel, which may be in the range from 15 to 22 inches. Such a slight banding is allowed by extending the perforation.

In figure 10 a more flexible adhesive tape 12f is shown. There is a plurality of cuts 12h on both sides of the adhesive tape forming individual sections for the balancing weights. Due to the opposing cuts, only a small connecting section between the individual adhesive tape sections remains, which can be easily bent in the plane of the drawing.

In figure 11 a further embodiment is shown. Here two balancing weight sections 13a and 13b are connected by the self-adhesive tape 12c. Furthermore, it is preferred, if at least one of the balancing weight sections 13b has a chamfered edge for sliding or pivoting against the other balancing weight section.

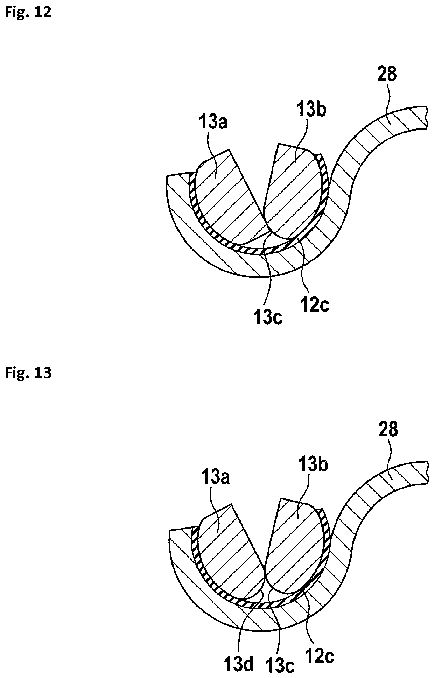

In figure 12 a slightly modified embodiment is shown. Here, one of the balancing weight sections 13b has a rounded edge 13c for sliding or pivoting against the other balancing weight section.

In figure 13 a further modified embodiment is shown. Here, both balancing weight sections 13a, 13b have rounded edges 13d, 13c for sliding or pivoting against the other balancing weight section.

### List of reference numerals

- 2: wheel rim
- 4: wheel disk
- 6: wheel band
- 8: wheel horn
- 10: tire
- 12: balancing weight
- 12a: weight section
- 12b: weight section
- 12c: adhesive tape
- 12d: adhesive tape
- 12e: extensions
- 12f: flexible adhesive tape
- 12g: perforation
- 12h: cut
- 13a: weight section
- 13b: weight section
- 13c: rounded edge
- 13d: rounded edge
- 15: gap
- 16: wheel rim
- 18: rim horn
- 20: tire
- 22: balancing weight
- 22a: weight section
- 22b: weight section
- 25: adhesive tape
- 26: wheel rim
- 28: rim horn
- 30: balancing weight
- 30a: weight section
- 30b: weight section
- 31: adhesive tape
- 32: connecting element
- 34: balancing weight

## Claims

1. Self-adhesive balancing weight for a vehicle wheel, having a contact surface adapted to fit to the rim of a wheel,
**characterized in that**
the balancing weight (12) is composed of at least two weight sections (12a, 12b) being pivotably connected with each other by means of a connecting element and having a pivot axis tangential with respect to the axis of a wheel rim (2) carrying the balancing weight (12).

2. Chain of Self-adhesive balancing weights (12) for a vehicle wheel, comprising a plurality of balancing weights which are held on a self-adhesive tape, the self-adhesive tape (12c) defining a longitudinal axis, **characterized in that**
the balancing weights comprise a body having at least two weight sections (12a, 12b) being pivotably held on the on a self-adhesive tape and having a pivot axis parallel to said longitudinal axis.

3. Balancing weight according to claim 1 or 2,
**characterized in that**
a hinge-like connecting element (12) is formed as a hinge integral with the adjacent weight sections (12a, 12b).

4. Balancing weight according to claim 1,
**characterized in that**
the connecting element consists of a flexible tape to which the weight sections (22a, 22b) are fixed.

5. Balancing weight according to claim 4,
**characterized in that**
the flexible tape is an adhesive tape (21)

6. Balancing weight according to anyone of the previous claims, **characterized in that**
a spacing gap (15) is formed between the respective weight sections (12a, 12b).

7. Balancing weight according to claim 1,
**characterized in that**
the contact surface of at least one of the weight sections (12a, 12b) is at least approximately complementary to the respective counter-surface of the wheel rim.

8. Balancing weight according to anyone of the previous claims, **characterized in that**
at least one extension (12e) is provided at one side of at least one weight section 12a, 12b.

9. Balancing weight according to claim 7,
**characterized in that**
two extension (12e) are provided on opposite sides of the balancing weight, with one extension at each of the weight sections (12a, 12b), .

10. Balancing weight according to anyone of the previous claims, **characterized in that**
a self-adhesive tape is provided at the balancing weight, which has a perforation or opposing cuts from its rim.

## Patentansprüche

1. Selbstklebendes Auswuchtgewicht für ein Fahrzeugrad mit einer Kontaktfläche, die dazu geeignet ist, an die Felge eines Rades zu passen, **dadurch gekennzeichnet, dass**
das Auswuchtgewicht (12) sich aus zumindest zwei Gewichtsabschnitten (12a, 12b) zusammensetzt, welche durch ein Verbindungselement schwenkbar miteinander verbunden sind und mit einer Schwenkachse, die tangential zur Achse der das Auswuchtgewicht (12) tragenden Radfelge (2) ist.

2. Kette von selbstklebenden Ausgleichsgewichten (12) für ein Fahrzeugrad, umfassend eine Vielzahl von Ausgleichsgewichten, welche auf einem selbstklebenden Band gehalten werden, wobei das selbstklebende Band (12c) eine Längsachse definiert,
**dadurch gekennzeichnet, dass**
die Ausgleichsgewichte einen Körper umfassen, welcher zumindest zwei Gewichtsabschnitte (12a, 12b) aufweist, die schwenkbar auf einem selbstklebenden Band gehalten werden und mit einer parallel zur Längsachse verlaufenden Schwenkachse.

3. Auswuchtgewicht gemäß Anspruch 1 oder 2,
**dadurch gekennzeichnet, dass**
ein scharnierartiges Verbindungselement (12) integral mit den benachbarten Gewichtsabschnitten (12a, 12b) als ein Scharnier ausgebildet ist.

4. Auswuchtgewicht gemäß Anspruch 1,
**dadurch gekennzeichnet, dass**
das Verbindungselement aus einem flexiblen Band besteht, an welchem die Gewichtsabschnitte (22a, 22b) befestigt sind.

5. Auswuchtgewicht gemäß Anspruch 4,
**dadurch gekennzeichnet, dass**
das flexible Band ein Klebeband (21) ist.

6. Auswuchtgewicht gemäß einem der vorhergehenden Ansprüche,
**dadurch gekennzeichnet, dass**
ein Abstandsspalt (15) zwischen den jeweiligen Gewichtsabschnitten (12a, 12b) ausgebildet ist.

7. Auswuchtgewicht nach Anspruch 1,
**dadurch gekennzeichnet, dass**
die Kontaktfläche von zumindest einem der Gewichtsabschnitte (12a, 12b) zumindest näherungsweise komplementär zu der entsprechenden Gegenfläche der Radfelge ist.

8. Auswuchtgewicht gemäß einem der vorhergehenden Ansprüche,
**dadurch gekennzeichnet, dass**
zumindest eine Verlängerung (12e) an einer Seite von zumindest einem Gewichtsabschnitt (12a, 12b) vorgesehen ist.

9. Auswuchtgewicht nach Anspruch 7,
**dadurch gekennzeichnet, dass**
zwei Verlängerungen (12e) auf gegenüberliegenden Seiten des Auswuchtgewichts vorgesehen sind, mit einer Verlängerung an jedem der Gewichtsabschnitte (12a, 12b).

10. Auswuchtgewicht gemäß einem der vorhergehenden Ansprüche,
**dadurch gekennzeichnet, dass**
ein selbstklebendes Band am Ausgleichsgewicht vorgesehen ist, welches eine Perforation oder gegenüberliegende Einschnitte von seinem Rand hat.

## Revendications

1. Un poids d'équilibrage auto-adhésif pour une roue de véhicule, ayant une surface de contact adaptée pour conformer au bord d'une roue,
**Caractérisé en ce que**
Le poids d'équilibrage (12) est composé d'au moins deux sections de poids (12a, 12b) étant connectées de façon pivotable l'une à l'autre au moyen d'un élément de connexion et ayant un axe de pivot tangentiel par rapport à l'axe d'un bord de roue (2) supportant le poids d'équilibrage (12).

2. Une chaîne de poids d'équilibrage auto-adhésifs (12) pour une roue de véhicule, comprenant une pluralité de poids d'équilibrage qui sont tenus sur une bande auto-adhésive, la bande auto-adhésive (12c) définissant un axe longitudinal, **caractérisé en ce que**
Les poids d'équilibrage comprennent un corps ayant au moins deux sections de poids (12a, 12b) étant tenu de façon pivotable sur une bande auto-adhésive et ayant un axe de pivot parallèle à cet axe longitudinal.

3. Un poids d'équilibrage selon la revendication 1 ou 2,
**Caractérisé en ce que**
Un élément de connexion comme une charnière (12) est formé comme une charnière intégrant les sections de poids adjacentes (12a, 12b).

4. Un poids d'équilibrage selon la revendication 1,
**Caractérisé en ce que**
L'élément de connexion se compose d'une bande flexible à laquelle les sections de poids (22a, 22b) sont fixées.

5. Un poids d'équilibrage selon la revendication 4,
**Caractérisé en ce que**
La bande flexible est une bande adhésive (21)

6. Un poids d'équilibrage selon l'une des revendications précédentes,
**Caractérisé en ce que**
Un espace d'écartement (15) est formé entre les sections de poids respectives (12a, 12b).

7. Un poids d'équilibrage selon la revendication 1,
**Caractérisé en ce que**
La surface de contact d'au moins une des sections de poids (12a, 12b) est au moins environ complémentaire à la contre-surface respective du bord de roue.

8. Un poids d'équilibrage selon l'une des revendications précédentes,
**Caractérisé en ce que**
Au moins une extension (12e) est fournie sur un côté d'au moins une section de poids 12a, 12b.

9. Un poids d'équilibrage selon la revendication 7,
**Caractérisé en ce que**
Deux extensions (12e) sont fournies sur des côtés opposés du poids d'équilibrage, avec une extension de chaque section de poids (12a, 12b).

10. Un poids d'équilibrage selon l'une des revendications précédentes,
**Caractérisé en ce que**
Une bande auto-adhésive est fournie au poids d'équilibrage, qui possède une perforation ou des coupes opposées à son bord.
